# EUROPEAN PATENT APPLICATION

(11) **EP 1 900 573 A1**
(43) Date of publication of application: **19.03.2008**
(21) Application number: 06425637.3
(22) Date of filing: 15.09.2006
(51) Int. Cl.: B60R 5/00

(54) **Adjustable overhead luggage bin structure**

(71) Applicant: Ellamp Interiors SPA, 21020 Bodio Lomnago VA (IT)
(72) Inventor: Boin, Gionata, 28921 Verbania (IT)
(74) Representative: Petruzziello, Aldo

(57) **Abstract**

An overhead luggage bin structure (1) for locomotion means for conveying people, such as buses and the like is described, comprising a bottom or supporting shelf (9) destined to be fixed to a side surface or sidewall (21) of the bus, a coupling member (5) destined to be fixed to an upper surface or roof (20) of the bus, and a luggage shelf or rack (6) destined to support luggage and able to be connected adjustably to said bottom (9) and said coupling member (5), so that the height and width of the overhead luggage bin structure (1) can be adjusted according to requirements and to the dimensions of the bus.

## Description

The present invention refers to an overhead luggage bin structure for locomotion means for conveying people, and in particular for long-distance buses (coach sector).

Specific reference will be made herein to buses, it being understood that the overhead luggage bin structure according to the invention can also be applied to other locomotion means, such as trains, hydrofoils, aircraft and the like.

As is known, especially in vehicles of the coach sector, an overhead luggage bin structure is provided above each seat to hold hand luggage. Since said baggage must be easily accessible during the journey, the overhead luggage bin structure is generally disposed beneath the roof of the bus and is integrated with a series of services dedicated to the individual seat such as loudspeakers, backlit seat marker lighting, ventilation outlets, etc. In particular, because of the latter, the overhead luggage bin is situated alongside an aeration channel. Said air channel is defined near the corner between the side wall and the roof of the bus and the air or conditioned air to be delivered to the passenger compartment of the bus passes therethrough.

In patent application WO 2006/032431 in the name of the same applicant, an overhead luggage bin structure is described which is able to adapt to the different geometry (angle between the side wall and the roof) of the cross section of the bus. Said overhead luggage bin structure of the prior art is made up of a plurality of anchoring systems which couple with each other to form a complex, multiple connection system with a series of elements which may or may not be present in order to customise the overhead luggage bin area according to the use to be made of each individual bus. In fact, as is obvious, a city bus will have very different available spaces and ergonomic requirements from those of a long-distance transport vehicle which must provide support and housing for luggage.

Furthermore, the luggage bin structure disclosed in WO 2006/032431 is adapted to the size of the bus through the use of attachment modules of different sizes; in this manner each module is specific and dedicated to the typical measurements of the bus, which are substantially the height of the roof, the height of the windows, the width of the bus and the angle between the roof and the side.

It would be desirable, however, to have a luggage bin structure that can be adjusted during assembly, without having to replace the anchoring modules in order to meet the required measurements.

The object of the present invention is to overcome the drawbacks of the prior art by providing an overhead luggage bin structure that is highly versatile, adapted to allow simple, rapid assembly/removal of additional components and that allows easy adjustment to adapt to means of transport of different sizes and shapes.

Another object of the present invention is to provide such an overhead luggage bin structure composed of a limited number of components of great structural simplicity, that are adjustable and interchangeable with one another.

Finally, a further object of the present invention is to provide an overhead luggage bin structure that is cheap, of limited weight and easy to assemble. These objects are achieved according to the invention with the characteristics listed in appended independent claim 1.

Advantageous embodiments of the invention are apparent from the dependent claims.

According to the invention, the overhead luggage bin structure for locomotion means for conveying passengers, such as buses and the like, comprises:
- a supporting shelf or bottom designed to be fixed to a side surface or side of the bus,
- a coupling member designed to be fixed to an upper surface or roof of the bus, and
- a shelf or luggage rack destined to support the luggage and adapted to be adjustably connected to said bottom and said coupling panel, so that the luggage bin structure can be adjusted in height and width according to the requirements and dimensions of the bus.

The advantages and versatility of the overhead luggage bin structure according to the invention are evident in that it can be adjusted in height and width according to requirements and to the dimensions of the bus.

Further characteristics of the invention will be made clearer by the detailed description that follows, referring to a purely exemplifying and therefore non limiting embodiment thereof, illustrated in the appended drawings, in which:
Figure 1 is a cross sectional view of the complete overhead luggage bin structure;
Fig. 1A is an enlarged view of the profile for coupling to the roof enclosed in the circle A of Figure 1;
Figure 1B is an enlarged view of the profile for coupling to the side wall of the bus shown in two different positions and enclosed in the circle B of Figure 1;
Figure 1C is a perspective view of the profile for coupling to the side wall of the bus of Figure 1B, shown in two different positions;
Figure 2 is a perspective view of the complete overhead luggage bin structure of Figure 1;
Figure 3 is a perspective exploded view of the overhead luggage bin structure of Figure 1 with the parts composing it made clear.

The overhead luggage bin according to the invention, designated as whole with reference numeral 1, is described hereunder with the aid of the figures.

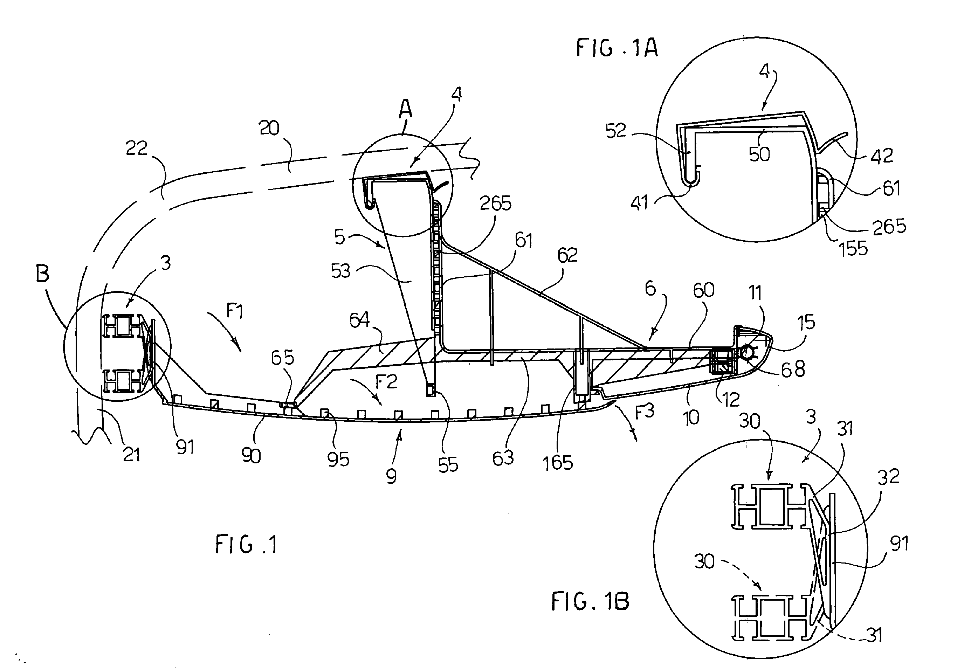

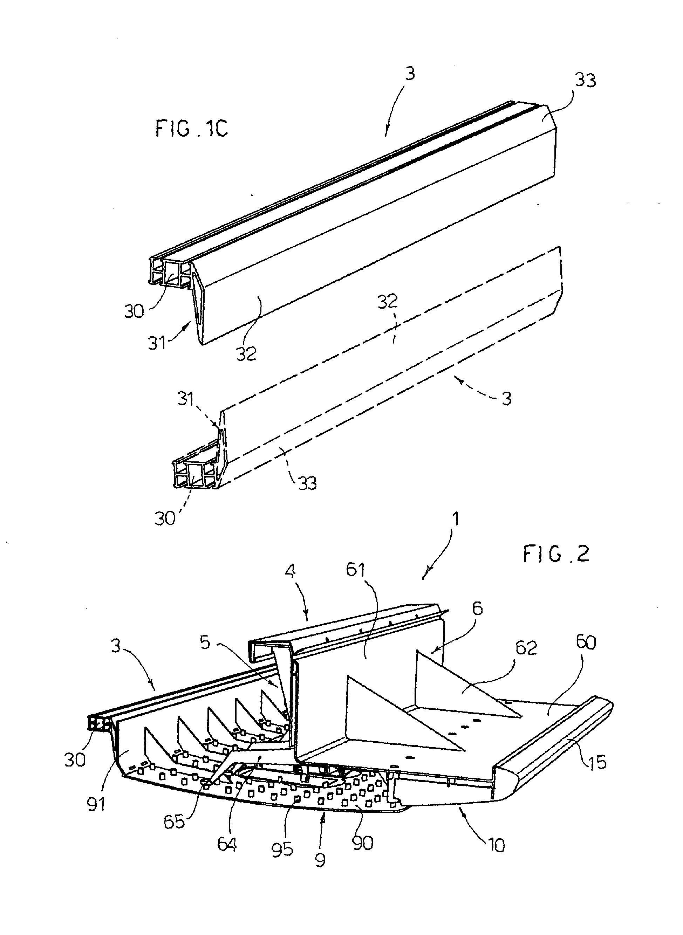

With reference to Figure 1, a roof 20 of a bus and a side wall 21 of a bus connected by a curved corner edge 22 are shown partially with a dashed line. The term "left" will be used hereunder to indicate the direction proximal to the side wall 21 and the term "right" will be used to indicate the direction distal to the side wall 21.

The overhead luggage bin structure 1 is disposed inside the bus, between the roof 20 and the top part of the side wall 21, so as to form a longitudinal channel for the passage of air. Said luggage bin structure 1 comprises a first shelf or bottom 9, a coupling member 5 and a second shelf or luggage rack 6 designed to support the passengers' luggage.

The bottom 9 is connected to the wall 21 of the bus by means of a profile 3 for coupling to the wall which can be positioned differently according to the height of the glass, so as to be disposed horizontally above the passenger seats.

For ease of representation, the profile 3 has been shown in two different positions in Figures 1, 1B and 1C.

The coupling member 5 is connected to the roof 20 of the bus, by means of a profile 4 for anchoring to the roof.

The luggage rack 6 is connected adjustably to the bottom 9 of the coupling member 5, to be able to vary the width and height of the luggage bin structure 1 so as to be able to adapt it to the shape and the requirements of the means of transport.

A lid 10 is disposed at the distal end of the wall 21 of the bus, between the bottom 9 and the luggage rack 6, so as to define a compartment wherein is housed a lamp 11, of the standard neon type, and electronics 12, such as an inverter, needed for operation of the lamp.

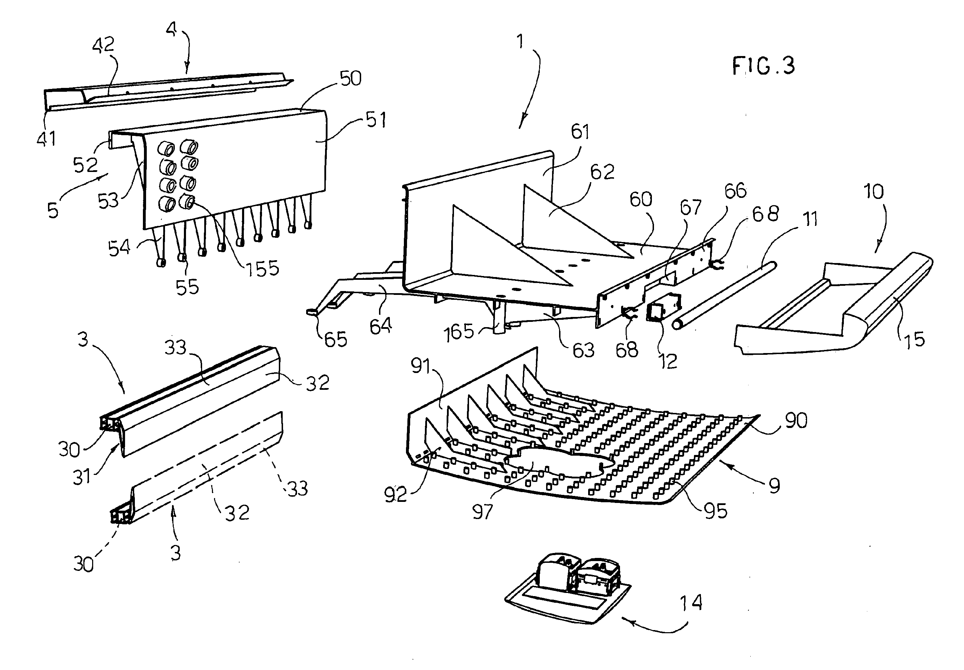

With reference also to Figures 2 and 3, the luggage rack 6 comprises a shelf, substantially L-shaped in section, consisting of a horizontal supporting plane 60 and a vertical abutment plane 61. Reinforcing ribs 62 in the form of triangular brackets are disposed in the angle between the planes 60 and 61 of the shelf of the luggage rack.

Beneath the horizontal plane 60 of the shelf of the luggage rack 6 are provided transverse ribs 63 which continue with extension arms 64 that protrude beyond the vertical surface 61 of the shelf extending towards the wall 21 of the bus. The extension arms 64 have a downwardly inclined end part that ends in a first coupling means 65. The first coupling means 65 of the extension arms is shaped as a bush or ring that defines a hole with its axis at right angles to the horizontal plane 60 of the shelf.

Beneath the horizontal plane 60 of the shelf, in a central position and coinciding with the ribs 63 are provided second coupling means 165 in the form of cylindrical sleeves or bushes provided with a downwardly open hole with its axis at right angles to the horizontal plane 62 of the shelf. The coupling means 65 and 165 are in register with each other and are evenly distributed along the entire length of the luggage racks 6.

As shown in Figures 1 and 1A a plurality of third coupling means 265 in the form of cylindrical protrusions, pins or bosses which protrude at right angles from the vertical plane 61 are provided in the rear surface of the vertical plane 61 of the shelf.

Coming back to Figure 3, a flat, substantially vertical dividing wall 66 having the dual function of retaining edge for the horizontal plane 60 of the luggage housing and fixing surface for standard type bases 68 for the neon lamp 11 is provided at the far right of the horizontal plane 60. Furthermore a rectangular recess 67 is formed in the flat dividing wall 66 such as to contain the electronics 12 for the neon light 11.

Though not being shown in the figures, the luggage rack 6 can be provided with restraining side walls adapted to determine a seat for luggage that can be closed by means of a door.

The coupling member 5 is substantially shaped as an upturned L in section and comprises a horizontal top plane 50 and a vertical side plane 51. The top plane 50 has at its end a downward protruding portion 52. Stiffening ribs 53 are disposed angularly between the top plane 50 and the side plane 51 of the coupling member 5.

The stiffening ribs 53 continue with extension arms 54 which protrude downward from the side panel. The extension arms 54 end in first coupling means 55. On the other hand, second coupling means 155 are provided on the front surface of the side plane 51 of the coupling panel, facing towards the vertical plane 61 of the supporting shelf.

The first coupling means 55 and the second coupling means 155 of the coupling member 5 are complementary to the third coupling means 265 provided on the rear surface of the vertical plane 61 of the supporting shelf 6. For this purpose the first and second coupling means 55, 155 of the coupling member 5 are bushes or rings able to receive, in a snap-fit coupling relationship (Figure A), the bosses 265 of the vertical plane 61 of the luggage shelf.

In particular the bushes 155 are evenly distributed in a horizontal and vertical direction on the surface of the vertical plane 51. This arrangement of the bushes 155 on the member 5 and of the bosses 265 on the supporting shelf 6 offers an extensive possibility of height adjustment of the overhead luggage bin structure 1, so that it can be adapted to the height of the roof 20 of the bus.

The profile 4 for anchoring to the roof engages integrally in the top part 50 of the coupling member 5 thanks to the shape of its profile, as will be described hereunder, it being understood that any known connecting and coupling means could be adopted to make the two parts integral.

As will be made clearer in Figure 1A, said profile 4 for anchoring to the roof is shaped substantially as a square C. At one end of the C a portion 41 bent inward towards the concavity of the C is provided, so as to define a U shape in order to be able to couple and engage with the end portion 52 of the coupling member 5. At the other end of the C is provided a portion 42 bent outward with respect to the concavity of the C and protruding for a short distance.

The profile 4 can be made of any fibre-reinforced plastic material or of cast or extruded aluminium (Al).

Coming back to Figure 3 Fig. 3, the bottom 9 is substantially L-shaped in section and comprises a horizontal plane 90 and a vertical plane 91. Reinforcing ribs 92 are disposed angularly between the horizontal plane 90 and the vertical plane 91.

On the top surface of the horizontal plane 90 are formed coupling means 95 complementary to the first and second coupling means 65, 165 of the luggage rack 6. The coupling means 95 are a plurality of cylindrical protrusions or bosses, evenly spaced from each other both longitudinally and transversally. The bosses 95 are of such an outside diameter and height as to allow them to be used, in a snap-fit coupling relationship, inside the respective rings 65 and the sleeves 165 integral with the luggage rack 6.

Likewise, as in the coupling between the coupling member 5 and the luggage rack 6, in this coupling between the luggage rack 6 and the bottom 9 also an extensive possibility of width adjustment is allowed, so as to lengthen or shorten the protrusion toward the right (that is, towards the aisle of the bus) of the overhead luggage bin 1 and thus allow it to be mounted on buses of different sizes.

An opening 97 is formed in the horizontal plane 90 of the bottom such as to receive a multiset unit 14, per se known, to provide a multitude of services to the passenger, such as lights, air conditioning and the like.

Coming back to Figure 1, the bottom 9 is anchored to the side wall 21 of the bus by means of a profile 3. This profile 3, as shown better in figures 1B and 1C, consists of an extruded part 30 shaped substantially as a double H in cross section and a second extruded part 31, substantially triangular in section.

The end of the first extruded, double H-shaped portion 30 is connected, by means of known fixing means, such as screws, nuts or nails, to the wall 21 of the bus. The second portion 31 comprises a flat portion 32 and an inclined portion 33.

The flat portion 32 is able to allow sliding of the profile 3 on the corresponding vertical plane 91 of the bottom 9, so as to allow the largest adjustment during assembly. The inclined portion 33 is adapted to avoid possible interference with the adjacent surfaces of the overhead luggage bin structure 1.

Different assembly of the profile 3 allows extensive adjustment during fixing, according to the different dimensions of the bus window.

As shown in Figures 2 and 3, the lid 10 is fixed to the luggage rack 6 by known fixing systems which are therefore not described in detail.

Said lid 10 is substantially L-shaped and has a rounded edge 15 (visible in section in Figure 1) in order to form a grab rail. The need to have this grab rail imposes on this lid 10 the requirement of being sturdy and strong to provide a support for the passenger when moving in the corridor if necessary.

Furthermore, the rounded edge 15 of the lid 10 has a semi-transparent window treated with suitable known anti-glare means to allow the light from the neon lamp 11 to diffuse. In this manner optimal lighting can be achieved without detracting from the passengers' comfort. It is, however, possible to fix said light in a traditional position, namely in the upper part of the overhead luggage bin, near the roof 20.

Sealing means (not visible in the figures) are provided between the lid 10 and the bottom 9 in order to prevent air leaks. The sealing means also have the function of allowing flexible coupling between the lid 10 and the rest of the luggage bin structure, in order to avoid annoying vibrations and noise due to shaking of the parts in contact when subjected to an airflow F1, F2, F3 (Figure 1) at variable pressures and speeds.

The overhead luggage bin structure 1 also serves to form a channel for the passage of air to distribute it optimally into the inside of the bus, so as to create the most comfortable climate for the passenger. As shown in Figure 1, the air channel is defined between the bottom 9, the luggage rack 6, and the angular part 22 between the roof 20 and the side wall 21 of the bus. The air flows in this channel in the direction of the arrow F1 and is channelled in the directions of the arrows F2 and F3 to adjustably exit respectively through the adjustable air outlets of the multisets 14 or slots formed beneath the lid 10.

As can be deduced from the foregoing description, the possibility of using a large number of bosses and relative complementary rings or bushes gives the various components of the overhead luggage bin forming the subject matter of the present invention various possibilities of adjustment, according, for example, to the height of the roof of the bus, the position of the windows, the width of the bus and the different slopes of the roof, thus ensuring in a simple manner a great versatility of assembly.

It is furthermore obvious that any other equivalent connecting and fixing means could be used in order to connect adjustably to each other the various elements that make up the overhead luggage bin structure of the present invention.

Numerous changes and modifications of detail within the reach of a person skilled in the art can be made to the present embodiment of the invention without thereby departing from the scope of the invention, as set forth in the appended claims.

## Claims

1. An overhead luggage bin structure (1) for means of locomotion for conveying passengers, such as buses (coaches) and the like, comprising:
- a supporting shelf or bottom (9) destined to be fixed to a side surface or sidewall (21) of the bus,
- a coupling member (5) destined to be fixed to a top surface or roof (20) of the bus, and
- a luggage shelf or rack (6) destined to support luggage and adapted to be connected, in a width-adjustable manner, to said bottom (9) and to said coupling member (5), so that the overhead luggage bin (1) can be adjusted in height and width according to requirements and to the dimensions of the bus.

2. An overhead luggage bin structure (1) according to claim 1, **characterized in that** said luggage rack (6) comprises connecting and fixing means (65, 165, 265) adapted to couple with complementary connecting and fixing means (95, 55, 155) provided respectively in said bottom (9) and in said coupling member (6).

3. An overhead luggage bin structure (1) according to claim 2, **characterized in that** said connecting and fixing means (65, 165, 265) of the luggage rack (6) couple with said complementary connecting and fixing means (95, 55, 155) of the bottom (9) and of the coupling member (6) by means of a snap-fit pin hole coupling system.

4. An overhead luggage bin structure (1) according to claim 3, **characterized in that** said connecting and fixing means (95) of the bottom (9) comprise a plurality of cylindrical protrusions or bosses disposed on the upper surface of the bottom (9), evenly spaced from one another longitudinally and transversally and said connecting and fixing means (65, 165) of the luggage rack (6) comprise rings or bushes disposed underneath with downwardly open holes to receive said bosses (95).

5. An overhead luggage bin structure (1) according to claim 4, **characterized in that** said luggage rack (6) comprises lower ribs (63) wherein said connecting and fixing bushes (165) are formed.

6. An overhead luggage bin structure (1) according to claim 4 or 5, **characterized in that** said luggage rack (6) comprises extension arms (64) at the end of which are formed said connecting and fixing rings (65).

7. An overhead luggage bin structure (1) according to any one of claims 3 to 6, **characterized in that** said connecting and fixing means (155) of the coupling member (5) comprise a plurality of bushes disposed on a vertical plane (51), evenly spaced from one another vertically and horizontally, and that said connecting and fixing means (265) of the luggage rack (6) comprise cylindrical protrusions or bosses disposed on a vertical plane (61) destined to engage in said bushes (155) of the coupling panel (5).

8. An overhead luggage bin structure (1) according to claim 7, **characterized in that** said coupling member (5) comprises extension arms (54) at the end of which are formed connecting and fixing rings (55) adapted to be engaged by said bosses (265) of the vertical plane (61) of the luggage rack (6).

9. An overhead luggage bin structure (1) according to any one of the preceding claims, **characterized in that** it comprises a profile (4) for anchoring to the roof which extends longitudinally to fix the upper end of the coupling member (5) to the roof (20) of the bus.

10. An overhead luggage bin structure (1) according to any one of the preceding claims, **characterized in that** it comprises a pair of profiles (3) for anchoring to the wall which extend longitudinally to fix the lateral end of the bottom (9) to the side wall (21) of the bus.

11. An overhead luggage bin structure (1) according to any one of the preceding claims, **characterized in that** it comprises a multiset unit (14) fixed to said bottom (9) and adapted to provide the passenger with a series of services.

12. An overhead luggage bin structure (1) according to any one of the preceding claims, **characterized in that** a channel for the passage of air is formed between said bottom (9), said luggage rack (6) and the corner part (22) between the roof (20) and the wall (21) of the bus.

13. An overhead luggage bin structure (1) according to any one of the preceding claims, **characterized in that** said luggage rack (6) comprises a base (60) for holding and supporting luggage ending in a retaining dividing wall supporting a standard neon type lamp (11) and there being formed in the retaining dividing wall (66) a housing or recess (67) adapted to contain electronics or an inverter (12) necessary for operation of said neon lamp (11).

14. An overhead luggage bin structure (1) according to any one of the preceding claims, **characterized in that** it comprises a lid (10) fixed removably to said luggage rack (6), the lid (10) having a semi-transparent window (15) treated with anti-glare varnish to allow light to radiate from a neon lamp (11).

15. An overhead luggage bin structure (1) according to claim 14, **characterized in that** said lid (10) has a rounded edge (15) acting as a handrail for the overhead luggage bin structure (1).
